# EUROPÄISCHE PATENTSCHRIFT

(11) **EP 1 304 207 B1**
(45) Veröffentlichungstag und Bekanntmachung des Hinweises auf die Patenterteilung: **02.05.2007**
(21) Anmeldenummer: 02018194.7
(22) Anmeldetag: 20.08.2002
(51) Int. Cl.: B29C 45/27, B29C 45/17

(54) **Komplettes Spritzseitenteil für eine Spritzgiessmaschine und Verfahren zur Wartung des darin enthaltenen Heisskanal-Verteilersystems**
Complete injection side mould part for an injection moulding machine and method for the maintenance of the hot runner distribution system incorporated therein
Partie de moule complète du côté injection pour une machine à mouler par injection et procédé pour l'entretien du système de distribution à canaux chauds y incorporé

(30) Priorität: 19.10.2001 DE 10151693
(43) Veröffentlichungstag der Anmeldung: 23.04.2003
(73) Patentinhaber: INCOE INTERNATIONAL, INC., D-63322 Rödermark (DE)
(72) Erfinder: Gauler, Kurt, D-64390 Erzhausen (DE)
(74) Vertreter: Boecker, Joachim

(56) Entgegenhaltungen:
- WO-A-01/98049
- DE-A- 3 610 515
- DE-A- 4 400 752
- PATENT ABSTRACTS OF JAPAN vol. 14, no. 46 (M-926), 26. Januar 1990 (1990-01-26) -& JP 01 275115 A (FUJITSU LTD), 2. November 1989 (1989-11-02) -& DATABASE WPI Week 198950 Derwent Publications Ltd., London, GB; AN 1989-367453 XP002228523 & JP 01 275115 A
- PATENT ABSTRACTS OF JAPAN vol. 12, no. 311 (M-734), 24. August 1988 (1988-08-24) -& JP 63 084913 A (NISSEI PLASTICS IND CO), 15. April 1988 (1988-04-15)

## Beschreibung

Die Erfindung bezieht sich auf ein komplettes Spritzseitenteil für eine Spritzgießmaschine und ein Verfahren zur Freilegung zwecks Wartung des in dem kompletten Spritzseitenteil enthaltenen Heißkanal-Verteilersystems, welches in Kompaktbauweise ausgebildet ist. Unter Kompaktbauweise versteht man, daß die Düsen fest mit dem Heißkanalverteilerblock verbunden sind und das System anschlußfertig verdrahtet ist. Das Heißkanal-Verteilersystem stellt also eine vollständige Einheit dar, an der alle elektrischen und hydraulischen Verbindungen bereits vorgenommen sind und die als solche vor ihrem Einbau geprüft werden kann.

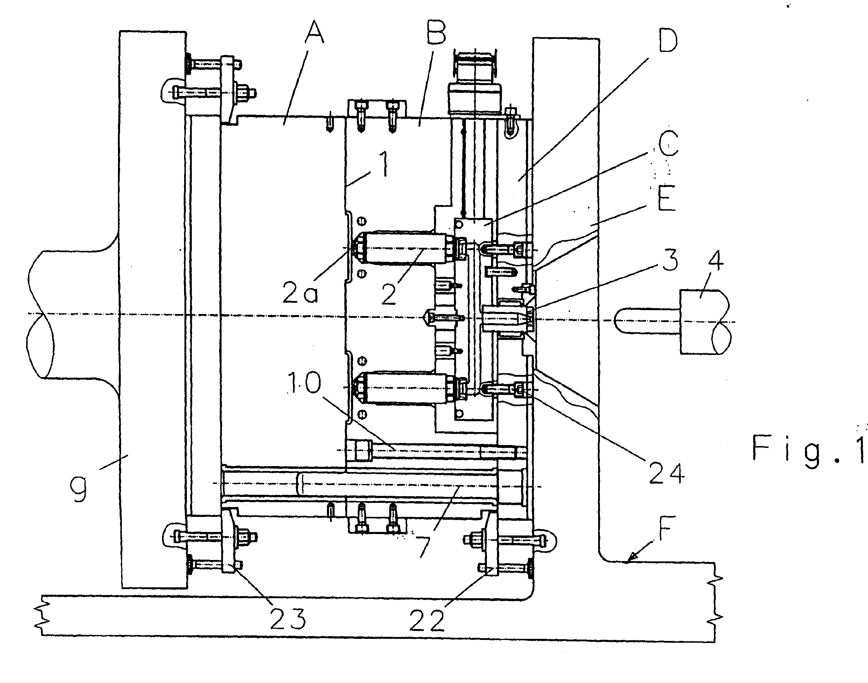

Den prinzipiellen Aufbau eines komplettes Spritzseitenteils und seine Einbaulage in eine Spritzgießmaschine zeigt Figur 1. Das Spritzwerkzeug besteht aus einem Werkzeugauswurfteil A und einem Werkzeugspritzteil B. 1 bezeichnet die Trennebene des Werkzeugs. Das Werkzeugauswurfteil A ist mittels der Klammern 23 an der beweglichen Maschinenplatte G der Spritzgießmaschine F, die in der Figur einschließlich ihres Spritzzylinders 4 nur angedeutet ist, befestigt, und ist mit dieser Maschinenplatte G hin- und herfahrbar, wobei die Form geöffnet beziehungsweise geschlossen wird. In das Werkzeugspritzteil B ragen die Düsen 2 hinein, die mit ihren Spitzen 2a an den Anschnittstellen in die Kavität des Werkzeugs münden, während sie mit ihrem anderen Ende fest mit dem Heißkanalverteilerblock C verbunden sind, der seinerseits über eine Angußbuchse 3 an die Spritzgießmaschine F angeschlossen ist. Der Heißkanalverteilerblock C ist zwischen dem Werkzeugspritzteil B und der Kopfplatte D mittels Bolzen 10 fest eingespannt, und das komplette Spritzseitenteil ist mittels der Klammern 22 an der festen Maschinenplatte E der Spritzgießmaschine F befestigt. Das exakte Fluchten der beiden Werkzeughälften A und B wird durch Führungsbolzen 7 sichergestellt, die lose von der Kopfplatte D her eingeführt sind und sich an der festen Maschinenplatte E der Spritzgießmaschine F abstützen.

Heißkanalverteilerblock C, Düsen 2 und Angußbuchsen 3 werden zusammen als Heißkanal-Verteilersystem bezeichnet. Das Heißkanal-Verteilersystem zusammen mit dem Werkzeugspritzteil B bildet das "komplette Spritzseitenteil", auf das sich die Erfindung bezieht.

Die Wartung eines kompakten Heißkanal-Verteilersystems erfolgte bisher wie folgt:

Das Werkzeug A, B wird geöffnet und das komplette Spritzseitenteil wird von der Spritzgießmaschine abgenommen. Auf einer Werkbank werden dann in den Figuren nicht dargestellte Bolzen, die von der Kopfplatte D her eingeführt und mit dem Werkzeugspritzteil B verschraubt sind, gelöst, so daß die Kopfplatte D abgenommen werden kann. Danach kann das in Kompaktbauweise aufgebaute Heißkanal-Verteilersystem mit allen Anschlüssen, einschließlich der fest angeschlossenen Düsen aus dem Werkzeugspritzteil B herausgenommen werden. Es ist dann für alle Wartungs- bzw. Reparturarbeiten zugänglich.

Das vorbeschriebene bekannte Verfahren zum Ausbau des Heißkanal-Verteilersystems zwecks Wartung ist umständlich und zeitaufwendig.

Aus dem Patent Extract of Japan Bd.14, Nr.46 (M-926), 26.01.1990 in Verbindung mit Figur 2 der zugehörigen JP-A-01275115 ist eine Spritzgießanlage bekannt, bei welcher ein schnelles Auswechseln des Heißkanal-verteilersystems möglich ist. Für jede Art und Farbe der Schmelze ist die Verwerdung eines anderen Heißkanal-Verteilersystems vorgesehen. Zu diesem Zweck ist an der Kopfplatte ein nach oben offener Rahmen mit an der Innenseite liegenden Nuten befestigt, und das Heißkanal-verteilersystem ist seitlich mit entsprechenden vorsprüngen versehen, mit denen es in die Nuten des offenen Rahmen von oben (oder von der Seite) her gleitend eingesetzt werden kann. An der dem Werkzeug zugewandten Seite des Rahmens wird das werkzeugspritzteil des Werkzeugs mit von der werkzeugseite her einzuführenden Bolzen befestigt. Ferner ist an dem Werkzeugspritzteil eine Befestigungsvorrichtung vorhanden, mit der das Werkzeugspritzteil mit dem werkzeugauswurfteil verbunden werden kann. Der Aufbau der bekannten Anordnung ist sehr aufwendig. Außerdem ist nicht erkennbar, wie eine saubere Ausrichtung der Düsen und der Angußbuchse in Bezug auf das Werkzeugspritzteil beziehungsweise die Gießmaschine bei der bekannten Anordnung erreichbar ist.

Der Erfindung liegt daher die Aufgabe zugrunde, ein komplettes Spritzseitenteil und ein Verfahren zum Ausbau des Heißkanal-Verteilersystems zwecks Wartung zu entwickeln, die einen einfacheren Weg ermöglichen, die zu wartenden, zu reparierenden oder zu ersetzenden Bauteile des Heißkanal-verteilersystems zugänglich zu machen.

Das neue verfahren wird ermöglicht durch geringfügige strukturelle Änderungen bekannter kompletter Spritzseitenteile wie sie in den Ansprüchen 1 und 2 genannt sind.

Das Verfahren gemäß der Erfindung zerfällt in zwei Abschnitte bei der Freilegung des Heißkanal-Verteilersystems für wartungszwecke, wobei der erste Abschnitt des Verfahrens, der zu einer begrenzten Freilegung führt, durch die Merkmale des Anspruches 3 gekennzeichnet ist und der zweite Abschnitt, der zur vollständigen Freilegung des Heißkanal-Verteilersystems führt, durch die Merkmale des Anspruches 4 gekennzeichnet ist. Die weitgehenden Wartungsmöglichkeiten, die bereits der erste Abschnitt des Verfahrens eröffnet, erfordern kein Abnehmen des kompletten Spritzseitenteil von der Spritzgießmaschine.

Im folgenden wird anhand eines in den Figuren gezeigten Ausführungsbeispiels die Freilegung des Heißkanal-verteilersystems für Wartungszwecke gemäß der Erfindung in seinen beiden Abschnitten und einzelnen Schritten beschrieben. Dabei werden zugleich die geringfügigen erfindungsgemäßen strukturellen Änderungen an dem bekannten kompletten Spritzseitenteil erläutert.
- Figur 1: zeigt ein Ausführungsbeispiel eines kompletten Spritzseitenteil gemäß der Erfindung und seine Einbaulage in eine Spritzgießmaschine,
- Figur 2: erläutert den ersten und zweiten Schritt des ersten Abschnitts des Verfahrens gemäß der Erfindung, also der Freilegung des in dem kompletten Spritzseitenteil der Figur 1 enthaltenen Heißkanal-Verteilersystems,
- Figur 3: erläutert den dritten Schritt des ersten Abschnitts des Verfahrens,
- Figur 4: erläutert den vierten Schritt des ersten Abschnitts des Verfahrens,
- Figur 5: erläutert den ersten und zweiten Schritt des zweiten Abschnitts des Verfahrens,

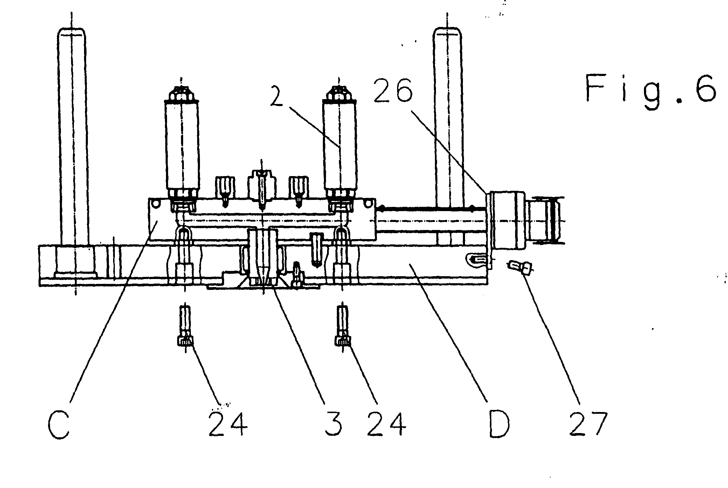

- Figur 6: erläutert den dritten Schritt des zweiten Abschnitts des Verfahrens.

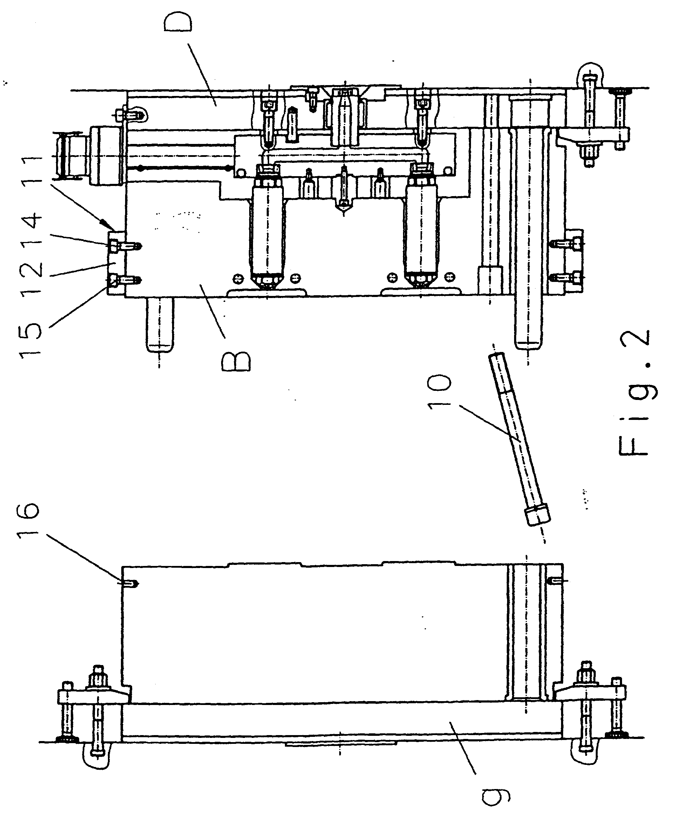

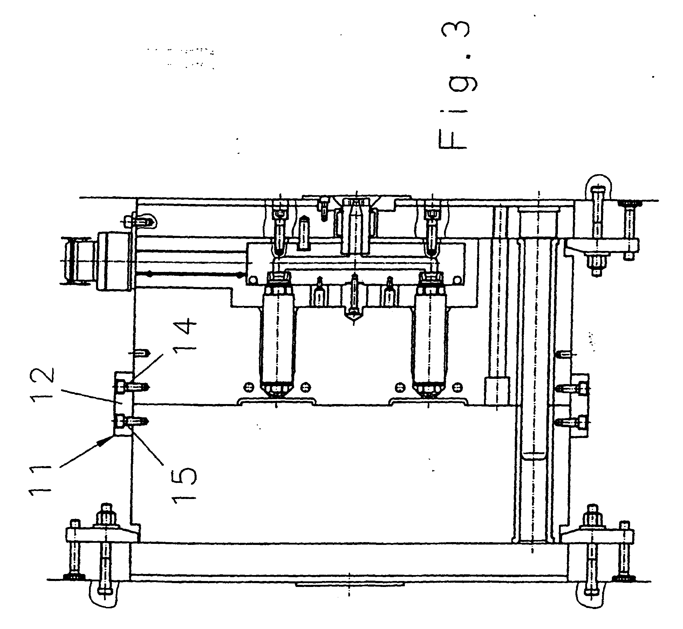

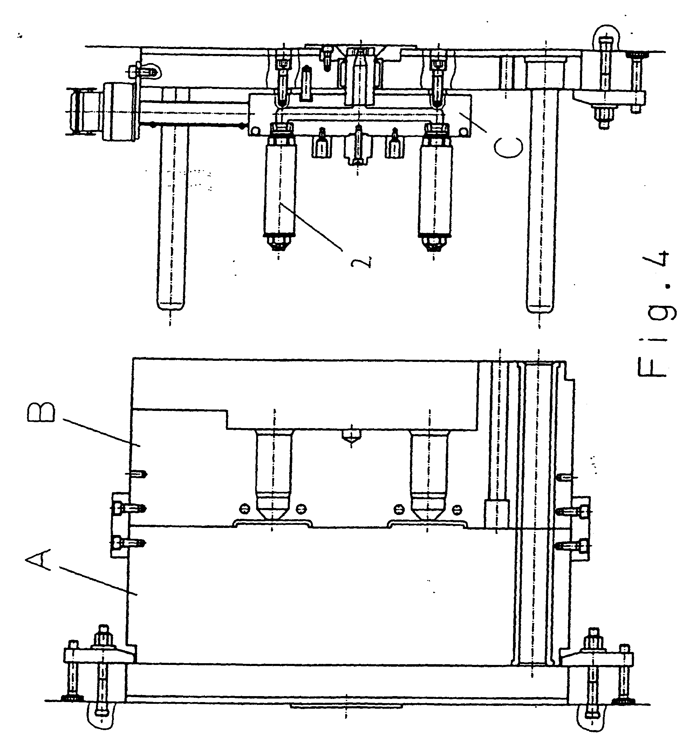

Der erste Abschnitt des Ausbaus bzw. der Freilegung des Heißkanal-Verteilersystems besteht aus folgenden Schritten:
1. Das Werkzeug wird geöffnet, das heißt, das Werkzeugauswurfteil A wird mittels der bewglichen Maschinenplatte G im Sinne der Figur 1 nach links gefahren (Figur 2).
2. Dann werden die Bolzen 10, mit denen das Werkzeugspritzteil B gegen die Kopfplatte D angepreßt wird, gelöst (Figur 2).
   Diese Bolzen sind gemäß der Erfindung von der Seite des Werkzeugspritzteil B eingeführt und zugänglich. Bei dem bekannten kompletten Spritzseitenteil sind sie von der Kopfplatte D her eingeführt.
3. Dann wird das Werkzeug wieder geschlossen, und die Laschen 12 der erfindungsgemäßen Befestigungsvorrichtungen 11, die zunächst mittels der beiden Schrauben 14,15 an dem Werkzeugspritzteil B befestigt sind (Figur 2), durch Entfernung der Schraube 14, Lösen der Schraube 15 und Schwenken der Lasche 12 um 180 Grad um die Schraube 14 so versetzt und über das Gewindeloches 16 festgeschraubt, daß sie nunmehr das Werkzeugauswurfteil A fest mit dem Werkzeugspritzteil B verbinden (Figur 3).
   Durch die Befestigungsvorrichtung 11 unterscheidet sich das komplette Spritzseitenteil ebenfalls vom Stand der Technik. Natürlich kann diese Befestigungsvorrichtung in beliebig anderer Weise als zuvor beispielhaft beschrieben ausgebildet sein. Entscheidend ist die Herstellung einer festen, tragenden lösbaren Verbindung zwischen den beiden Werkzeugteilen A und B.
4. Dann wird das Werkzeugauswurfteil A wieder im Sinne der Figuren nach links gefahren, wobei das Werkzeugspritzteil B mitgenommen wird und das Heißkanal-Verteilersystem mit seinem Heißkanalverteilerblock C und den Düsen 2 von einer Seite freigelegt wird (Figur 4).

Damit ist der erste Abschnitt des Verfahrens zur Freilegung des Heißkanal-Verteilersystems abgeschlossen. Es können nun, ohne daß das System von der Spritzgießmaschine abgenommen werden muß, viele Wartungsarbeiten vorgenommen werden, wie zum Beispiel das Wechseln von Anschnittkappen, Anschnittspitzen, Düsenheizungen, Düsenfühlern und Verteilerfühlern sowie eine Überprüfung der Elektrik und der Leckage.

Sind keine weiteren Wartungsarbeiten erforderlich, so wird das werkzeugspritzteil B wieder über die Düsen 2 und den Heißkanalverteilerblock C zurückgefahren. Dann werden die Laschen 12 in ihre ursprüngliche Lage am Werkzeugspritzteil B zurückmontiert, das Werkzeug wieder geöffnet, und die Bolzen 11, welche das Werkzeugspritzteil B und die Kopfplatte D unter Vorspannung miteinander verbinden, werden wieder eingesetzt.

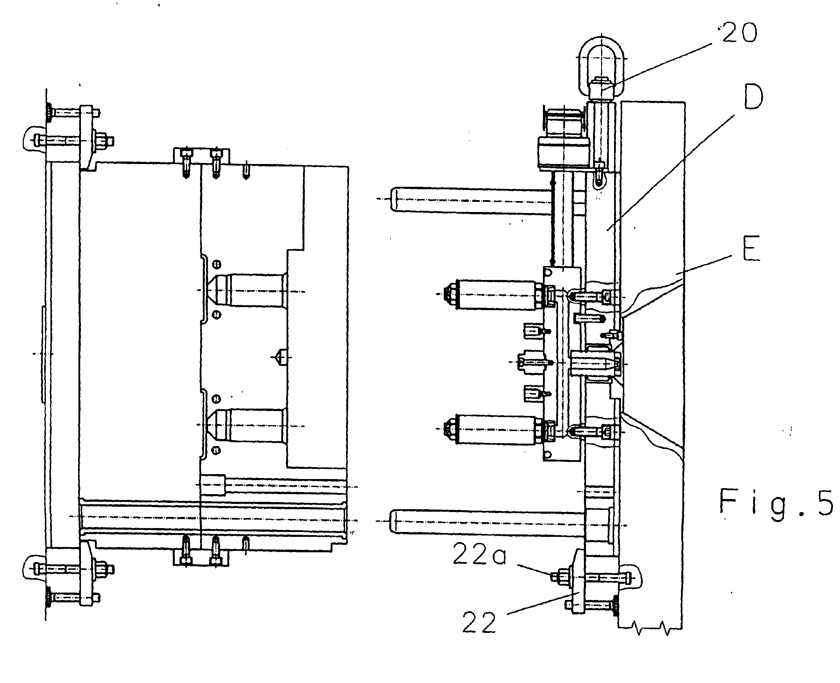

Sind auch Wartungsarbeiten an der den Düsen gegenüberliegenden Seite des Heißkanal-Verteilersystems erforderlich, dann schließt sich an den ersten Verfahrensabschnitt der zweite Verfahrensabschnitt zur Freilegung des Heißkanal-Verteilersystems an, welches aus folgenden Schritten besteht:
1. In ein an der Kopfplatte D vorhandenes Gewindeloch wird in bekannter Weise eine Tragöse 20 eingesetzt, und der Haken eines Krans wird in Tragöse eingehängt (Figur 5).
2. Dann wird die Befestigung der Kopfplatte D an der festen Maschinenplatte E der Spritzgießmaschine F durch Lösen und Wegnahme Klammern 22 von dem Klammergewindestift 22a aufgehoben und die Kopfplatte mit dem Heißkanal-Verteilersystem auf eine Werkbank transportiert (Figur 5).
3. Auf der Werkbank werden die Befestigungsschrauben 24 und die den Stützflansch 26 haltende Schraube 27 entfernt und die Kopfplatte D von dem Heißkanal-Verteilersystem weggehoben.

Damit steht das ganze Heißkanal-Verteilersystem, bestehend aus den Heißkanalverteilerblock C, den Düsen 2 und der Angußbuchse 3 und den zugehörigen elektrischen, pneumatischen und hydraulischen Verbindungen allseitig für Wartungsarbeiten zur Verfügung.

In entsprechender umgekehrter Reihenfolge der Schritte der beiden beschriebenen Verfahrensabschnitte erfolgt der Wiederzusammenbau des kompletten Spritzseitenteil nach erfolgter Wartung.

Die Befestigungsschrauben 24, mit denen die Kopfplatte D mit dem Heißkanalverteilerblock C verbunden ist, stellt eine weitere erfindungsgemäße Änderung des kompletten Spritzseitenteil gegenüber dem Stand der Technik dar. Im Stand der Technik wird - wie bereits erwähnt - eine kraftschlüssige Verbindung zwischen der Kopfplatte D und dem Heißkanalverteilerblock C durch Bolzen hergestellt, die von der Kopfplatte D her eingeführt werden und das Werkzeugspritzteil B fest gegen die Kopfplatte D ziehen. Bei der Erfindung dagegen werden die entsprechenden Bolzen 10 (Figur 2) vom der Seite des Werkzeugspritzteil B eingeführt und bereits im ersten Verfahrensabschnitt entfernt.

Die Erfindung erlaubt somit nach Abschluß des ersten Verfahrensabschnittes eine fast vollständige Wartung des Heißkanal-Verteilersystems, während dieses weiterhin an der Spritzgießmaschine befestigt ist.

Der Werkbankservice im Anschluß an den zweiten Verfahrensabschnitt ist ohne Abklemmen der elektrischen, pneumatischen und hydraulischen Verbindungen möglich.

## Patentansprüche

1. Komplettes Spritzseitenteil für eine Spritzgießmaschine, bestehend aus einem in Kompaktbauweise ausgebildeten Heißkanal-Verteilersystem, zu dem ein Heißkanalverteilerblock (C), Düsen (2) und eine Angußbuchse (3) gehören, einem Werkzeugspritzteil (B) und einer Kopfplatte (D), wobei das Heißkanal-Verteilersystem zwischen dem Werkzeugspritzteil (B) und Kopfplatte (D) fest eingespannt ist, mit von dem Werkzeugspritzteil (B) aus eingeführten Bolzen (10), welche das Werkzeugspritzteil (B) mit der Kopfplatte (D) verbinden, und mit einer Befestigungsvorrichtung (11), mittels welcher in geschlossenem Zustand des Werkzeugs das werkzeugspritzteil (B) mit dem Werkzeugauswurfteil (A) verbindbar ist, **dadurch gekennzeichnet, daß** zum Zwecke der wartung
- die Kopfplatte (D) mittels zusätzlicher von der Spritzgießmaschinenseite aus eingeschraubter Befestigungsschrauben (24) mit dem Verteilerblock (C) verbunden ist und
- daß zur Sicherstellung eines exakten Fluchtens der beiden werkzeughälften (A) und (B) Führungsbolzen (7) vorhanden sind, die lose von der Kopfplatte (D) her eingeführt sind und sich an der festen Maschinenplatte (E) der Spritzgießmaschine (F) abstützen.

2. Komplettes Spritzseitenteil nach Anspruch 1, **dadurch gekennzeichnet, daß** die Befestigungsvorrichtung (11) zwischen dem Werkzeugauswurfteil (A) und dem Werkzeugspritzteil (B) aus einer oder mehreren Laschen (12) besteht, die im Normalzustand an dem Werkzeugspritzteil (B) nahe dem Übergang zu dem Werkzeugauswurfteil (A) mittels zweier Schrauben (14,15) angeschraubt ist/sind und die durch Schwenken um die dem Werkzeugauswurfteil (A) am nächsten gelegenen Schraube (15) über ein entsprechendes Gewindeloch (16) im Werkzeugauswurfteil (A) mit diesem verschraubar ist/sind.

3. Verfahren zur Freilegung eines Heißkanal-Verteilersystems in einem kompletten Spritzseitenteil nach einem der Ansprüche 1 oder 2 zum Zwecke der Wartung, **gekennzeichnet durch** folgende verfahrensschritte:
- Öffnung des Werkzeugs,
- Lösen der das Werkzeugspritzteil (B) mit der Kopfplatte (D) verspannenden Bolzen (10),
- Schließen des Werkzeugs und Anbringung der Befestigungsvorrichtung (11) zwischen dem Werkzeugauswurfteil (A) und dem Werkzeugspritzteil (B),
- Abziehen des gesamten Werkzeugs (A,B) von dem Heißkanal-Verteilersystem **durch** Verfahren des Werkzeugs in die Öffnungsstellung.

4. Verfahren nach Anspruch 3, **gekennzeichnet durch** folgende sich an die genannten Verfahrensschritte anschließenden Verfahrensschritte:
- Einsetzen einer Tragöse (20) in der Kopfplatte (D) und Einhängen eines Kranhakens in die Tragöse,
- Lösen der Befestigung der Kopfplatte (D) von der festen Maschinenplatte (E) der Spritzgießmaschine (F) und Transport der Kopfplatte (D) mit dem daran befestigten Heißkanal-Verteilersystem auf eine Werkbank,
- Lösen der die Kopfplatte (D) mit dem Heißkanalverteilerblock (C) des Heißkanal-Verteilersystems verbindenden Bolzen (24) und sonstger Schraubverbindungen (27) zwischen Kopfplatte (D) und Heißkanalverteilerblock (C) und Wegheben der Kopfplatte.

5. Verfahren nach einem der Ansprüche 3 oder 4, **dadurch gekennzeichnet, daß** der Wiederzusammenbau des kompletten Spritzseitenteils nach erfolgter Wartung in umgekehrter Reihenfolge wie der Auseinanderbau erfolgt.

## Claims

1. Complete injection side portion for an injection moulding machine comprising a hot-channel distributor system built up in compact constructional form and consisting of a hot-channel distributor block (C), nozzles (2) and a sprue bushing (3), further comprising a ejection mould portion (B) and a head plate (D), said hot-channel distributor system being rigidly clamped between the injection mould portion (B) and the head plate (D), and further comprising bolts (10) which are inserted from the side of the ejection mould portion (B), which bolts connect the ejection mould portion (B) and the head plate (D), and with a fastening device (11) by means of which in closed condition of the mold the injection mould portion (B) is connectable with the ejection mould portion (A)
**characterized in that** for the purpose of maintenance
the head plate (D) is connected with the distributor block (C) by means of additional fastening screws (24) inserted from the side of the injection moulding machine and
that for securing an accurate alignment of the two mold halves (A) and (B) there are guide bolts (7) which are loosely inserted from the side of the head plate (D) and which abut against the stationary machine plate (E) of the injection moulding machine (F).

2. Complete injection side portion according to claim 1, **characterized in that** the fastening device (11) between the ejection mould portion (A) and the injection mould portion (B) consists of one or several shackle/shackles which under normal condition is/are fastened to the injection mould portion (B) by two screws (14,15) close to the change-over to the ejection mould portion (A) and which shackle/shackles is/are adapted to be bolted with the ejection mould portion (A) by swivelling it/them around that screw (15), which is positioned closest to the ejection mould portion (A), over a corresponding screw hole (16) in the ejection mould portion (A).

3. Method for laying bare of a hot-channel distributor system in a complete injection side portion according to any of claims 1 or 2 for the purpose of maintenance **characterized by** the following process steps:
- opening of the mold,
- detaching the bolts (10) clapping together the injection mould portion (B) and the head plate (D),
- closing the mold and mounting the fastening device (11) between the ejection mould portion (A) and the injection mould portion (B),
- pulling the entire mold (A,B) from the hot-channel distributor system by moving the mold into its opening position.

4. Method according to claim 3, **characterized by** the following process steps which follow the afore-said process steps:
- inserting a bearing ear (20) into the head plate (D) and inserting a crane hook into said bearing ear,
- loosening the attachment of the head plate (D) from the stationary machine plate (E) of the injection moulding machine (F) and transporting the head plate (D) with the hot-channel distributor system attached thereto onto a work bench,
- loosening of the bolts (24) which connect the head plate (D) to the hot-channel distributor block (C) of the hot-channel distributor system and loosening of other screw connections (27) between the head plate (D) and the hot-channel distributor block (C) and removing the head plate.

5. Method according to any of claims 3 or 4, **characterized in that** the reassembling of the complete injection side portion after completed maintenance takes place in the inverse sequence as during dismantling.

## Revendications

1. Partie complète côté injection d'une machine à mouler par injection, constituée d'un système répartiteur à canal chaud formé suivant un mode de construction peu encombrant et auquel appartiennent un bloc (C) répartiteur de canal chaud, des buses (2) et une douille (3) de carotte, d'une partie (B) d'injection d'outil et d'une plaque (D) de tête, le système répartiteur à canal chaud étant bloqué solidement entre la partie (B) d'injection d'outil à la plaque (D) de tête, comprenant des boulons (10) qui sont introduits depuis la partie (B) de projection d'outil et qui assemblent la partie (B) de la projection d'outil à la plaque (D) de tête, comprenant un dispositif (11) de fixation au moyen duquel, à l'état fermé de l'outil, la partie (B) d'injection d'outil peut être assemblée à la partie (A) d'éjection d'outil, **caractérisé en ce qu'**à des fins d'entretien
- la plaque (D) de tête est assemblée au bloc (C) répartiteur au moyen de vis (24) de fixation vissées supplémentairement à partir du côté de la machine de moulage par injection et
- **en ce que**, pour assurer un alignement exact des deux moitiés (A) et (B) d'outil, il y a des axes (7) de guidage, qui sont insérés de manière lache depuis la plaque (D) de tête et qui s'appuient sur la plaque (E) fixe de la machine (F) de moulage par injection.

2. Partie complète côté injection suivant la revendication 1, **caractérisée en ce que** le dispositif (11) de fixation entre la partie (A) d'éjection d'outil à la partie (B) d'injection d'outil est constitué d'un ou de plusieurs colliers (12) qui, à l'état normal, est où sont vissés au moyen de deux vis (14, 15) sur la partie (B) d'injection d'outil à proximité de la transition avec la partie (A) d'éjection d'outil et qui, en tournant autour de la vis (15) la plus proche de la partie (A) d'éjection d'outil, peut ou peuvent être vissées à la partie (A) d'éjection d'outil par un trou (16) taraudé correspondant de cette dernière.

3. Procédé pour dégager un système répartiteur à canal chaud dans une partie complète côté injection suivant l'une des revendications 1 ou 2 à des fins d'entretien, **caractérisé par** des stades de procédés suivants :
- on ouvre l'outil,
- on desserre le boulon (10) bloquant la partie (B) d'injection d'outil avec la plaque (D) de tête,
- on ferme l'outil et on met le dispositif (11) de fixation entre la partie (A) d'éjection d'outil à la partie (B) d'injection d'outil,
- on retire tout l'outil (A, B) du système répartiteur à canal chaud en faisant venir l'outil dans la position d'ouverture.

4. Procédé suivant la revendication 3, **caractérisé par** des stades de procédé suivants, faisant suite aux stades de procédé mentionnés :
- on met un anneau (20) porteur dans la plaque (D) de tête et on accroche un crochet de grue dans l'anneau porteur,
- on défait la fixation de la plaque (D) de tête et de la plaque (E) fixe de la machine (F) de moulage par injection et on transporte la plaque (D) de tête ayant le système répartiteur à canal chaud qui y est fixé sur un établi,
- on dévisse les boulons (24) et d'autres joints (27) vissés assemblant la plaque (D) de tête au bloc (C) du système répartiteur à canal chaud entre la plaque (D) de tête et le bloc (C) répartiteur à canal chaud et on enlève la plaque de tête.

5. Procédé suivant l'une des revendications 3 ou 4, **caractérisé en ce que** l'on réassemble la partie complète côté injection, après avoir effectué l'entretien en procédant dans l'ordre inverse au désassemblage.
